# EUROPÄISCHE PATENTANMELDUNG

(11) **EP 2 434 355 A1**
(43) Veröffentlichungstag der Anmeldung: **28.03.2012**
(21) Anmeldenummer: 11181975.1
(22) Anmeldetag: 20.09.2011
(51) Int. Cl.: G05B 9/02, G05B 19/042

(54) **Not-Aus-Modul-Anordnung**

(30) Priorität: 22.09.2010 DE 102010037714
(71) Anmelder: Schneider Electric Automaton GmbH, 63500 Seligenstadt (DE)
(72) Erfinder: Juhrig, Mark, 64853 Otzberg (DE)
(74) Vertreter: Stoffregen, Hans-Herbert

(57) **Zusammenfassung**

Die Erfindung bezieht sich auf eine Not-Aus-Modul-Anordnung (12, 14; 86, 88; 190, 192), umfassend einen Logik-Schaltkreis (20, 22; 90, 194) zur Erfassung eines Schaltzustands eines Not-Aus-Schalters (40) und zur Ansteuerung eines Lastschalters (16, 18) zum sicheren Ein- und Ausschalten einer Last, wobei die Not-Aus-Modul-Anordnung (12, 14; 86, 88; 190, 192) ein erstes Not-Aus-Modul (12, 86, 190) sowie ein zweites Not-Aus-Modul (14, 88, 192) aufweist und wobei das erste Not-Aus-Modul (12; 86; 190) über eine Schnittstellenverbindung (82, 176, 178, 166, 164; 260, 262, 242, 240) mit dem zweiten Not-Aus-Modul (14, 88, 192) gekoppelt ist. Um den Verdrahtungsaufwand sowie den Platzbedarf für die Anordnung in einem Schaltschrank zu reduzieren ist vorgesehen, dass die Not-Aus-Module (12, 14; 86, 88; 190, 192) als auf die Lastschalter (16, 18) aufsteckbare Aufsteckmodule ausgebildet sind und dass jedes der Not-Aus-Module zumindest ein mit dem gekoppelten Lastschalter (16, 18) mechanisch zwangsgeführtes Schaltmittel (42, 44; 136, 142; 218, 254) aufweist.

## Beschreibung

Die Erfindung bezieht sich auf eine Not-Aus-Modul-Anordnung nach dem Oberbegriff des Anspruchs 1.

Eine derartige Not-Aus-Modul-Anordnung sowie ein Verfahren zum Betrieb einer solchen ist in der DE-A-100 38 953 offenbart. Die Not-Aus-Modul-Anordnung umfasst einen Logikschaltkreis zur Erfassung eines Schaltzustandes eines Not-Aus-Schalters und zur Ansteuerung eines Lastschalters zum sicheren Ein- und Ausschalten einer Last. Ferner sind ein Not-Aus-Master-Mikroprozessor und ein Not-Aus-Slave-Mikroprozessor vorgesehen, wobei der Not-Aus-Master-Mikroprozessor über eine interne Schnittstellenverbindung mit dem Not-Aus-Slave- Mikroprozessor gekoppelt ist.

Eine Not-Aus-Modul-Anordnung ist beispielsweise aus der Produktbeschreibung "Safety Automation System Solutions; Preventa Safety Moduls Type XPS-AF", Schneider Electric, 38781-EN_VER 9.1.indd bekannt.

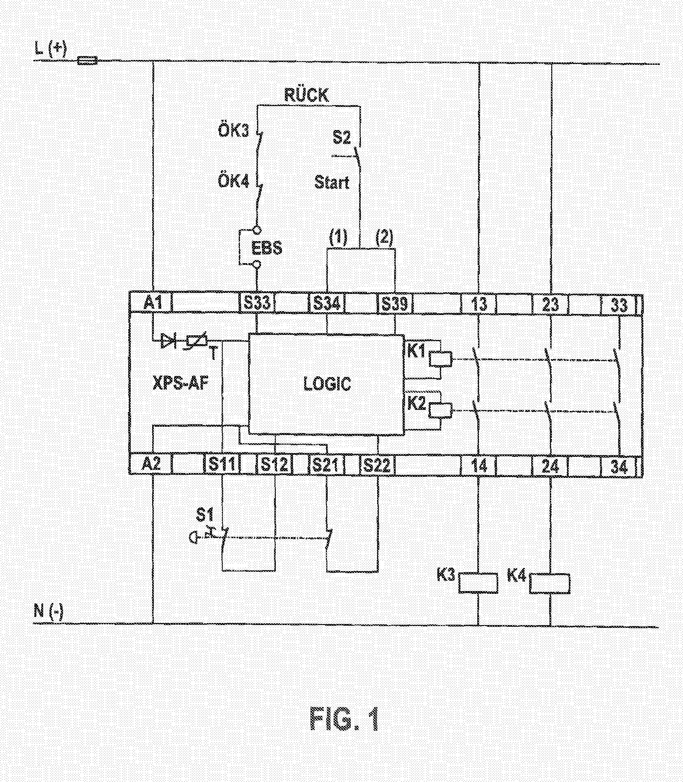

Die Not-Aus-Sicherheitsschaltung nach dem Stand der Technik ist in Fig. 1 dargestellt. Basis der Sicherheitsschaltung ist das Not-Aus-Modul XPS-AF, das über Verbindungsleitungen an Versorgungsspannung L+, N- liegt. Das Not-Aus-Modul XPS-AF umfasst Eingänge S11-S12 sowie S21-S22, über die ein Schaltzustand der Öffnerkontakte eines zweikanaligen Not-Aus-Schalters S 1 mittels einer Logik-Schaltung LOGIC ausgewertet werden kann. Der Logik-Schaltkreis LOGIC weist Ausgänge zur Ansteuerung von Relais K1, K2 auf, deren in Reihe geschaltete Schließerkontakte jeweils Freigabepfade 13-14 sowie 23-24 bilden. Über die Freigabepfade 13-14, 23-24 können zur Erhöhung des Schaltstroms Lastschalter K3, K4 eingeschaltet werden, über deren Schließerkontakte (nicht dargestellt) ein externer Verbraucher wie Motor ein- bzw. ausgeschaltet werden kann.

Ferner umfasst das Not-Aus-Modul XPS-AF Eingänge S33, S34, S39 zur Erfassung eines Schaltzustands eines Rückführkreises RÜCK. Der Rückführkreis RÜCK umfasst eine Reihenschaltung von durch die Lastschalter K3,K4 zwangsgeführten Öffner-Kontakten ÖK3, ÖK4 und gegebenenfalls einen Start-Taster S2. Die Öffner-Kontakte ÖK3, ÖK4 können von den Lastschaltern selbst oder durch auf die Lastschalter aufsteckbare Hilfsschalter HS3, HS4 zur Verfügung gestellt werden.

Wird das Not-Aus-Modul XPS-AF zur Erhöhung eines Schaltstroms üblicherweise mit den Lastschaltern K3, K4 und Hilfsschaltern HS3, HS4 erweitert, hat dies einen entsprechenden Verdrahtungsaufwand zur Folge.

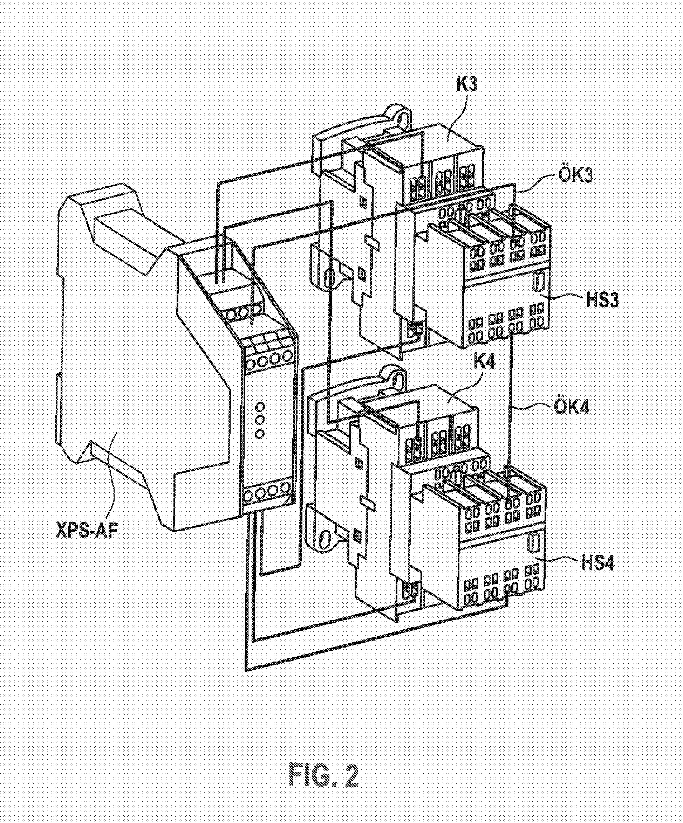

Fig. 2 zeigt in perspektivischer Darstellung eine konventionelle Verdrahtung bei Verwendung des Not-Aus-Moduls XPS-AF gemäß Fig. 1 mit zwei Lastschaltern in Form von Schützen K3, K4 sowie auf die Lastschalter aufsteckbare Hilfsschalter HS.

Zur Verdrahtung des Rückführkreises RÜCK sind insgesamt drei Verbindungsleitungen notwendig. Hinzu kommen Steuerleitungen für die Lastschalter. Ferner werden insgesamt fünf Baugruppen benötigt.

Davon ausgehend liegt der vorliegenden Erfindung die Aufgabe zugrunde, eine Not-Aus-Modul-Anordnung derart weiterzubilden, dass der Verdrahtungsaufwand sowie der Platzbedarf in einem Schaltschrank verringert wird.

Zur Lösung der Aufgabe wird eine Not-Aus-Modul-Anordnung mit den Merkmalen des Anspruchs 1 vorgeschlagen.

Durch die Integration einer Not-Aus-Funktionalität in die auf die jeweiligen Lastschalter aufsteckbaren Schaltmittel-Module wird sowohl der Platzbedarf im Schaltschrank als auch der Verdrahtungsaufwand reduziert, da die Not-Aus-Module auf die Lastschalter aufgesteckt werden können. Ferner wird auch der Verdrahtungsaufwand reduziert, da die Verbindungsleitungen von dem Not-Aus-Modul nach dem Stand der Technik zu den Öffner-Kontakten des Lastschalters bzw. Hilfsschalters sowie zu den Anschlüssen der Lastschalter entfallen bzw. innerhalb einer Baugruppe aus Lastschalter und Not-Aus-Modul ausgeführt werden können.

Durch die erfindungsgemäße Ausführungsform wird erreicht, dass die "Rückführinformation", die bei konventioneller Verdrahtung über den Rückführkreis zum Not-Aus-Modul gelangt, über die mechanische Zwangskoppelung der "Aufsteckschnittstelle" von den Lastschaltern an die in den Not-Aus-Modulen integrierten Schaltmitteln übertragen wird.

Das zwangsgeführte Schaltmittel zur Erfassung des Schaltzustands der Lastschalter kann als mechanischer Öffner-Kontakt oder als optisches Schaltelement ausgebildet sein.

In bevorzugter Ausführungsform sind die Schaltmittel zur Ansteuerung des Lastschalters als Schließer-Kontakt, vorzugsweise als eine Reihenschaltung von zwei Schließer-Kontakten ausgebildet, wobei jeder Schließer-Kontakt von einem Sicherheitsrelais mittels des Logik-Schaltkreises ansteuerbar ist.

Alternativ können die Schaltmittel zur Ansteuerung des Lastschalters auch als Halbleiterschaltelemente wie Transistoren ausgebildet sein.

Vorzugsweise ist das erste Not-Aus-Modul als Master-Modul und das zweite Not-Aus-Modul als Slave-Modul ausgebildet, wobei zwischen dem Master-Modul und dem Slave-Modul eine Kommunikationsschnittstelle ausgebildet ist. Vorzugsweise ist das Master-Modul mit dem Slave-Modul über die Kommunikationsschnittstelle wie elektrische Leiter verbunden.

Ein erfindungsgemäßes Not-Aus-Modul zeichnet sich dadurch aus, dass dieses als ein auf den Lastschalter aufsteckbares Aufsteckmodul ausgebildet ist, umfassend zumindest ein mit dem Lastschalter zwangsöffnendes Schaltmittel wie Öffner-Kontakt oder optisches Schaltmittel, dessen Schaltzustand mittels des Logik-Schaltkreises erfassbar ist, sowie eine Schnittstelle zur Verbindung mit einem weiteren aufsteckbaren Not-Aus-Schalter.

Eine bevorzugte Ausführungsform zeichnet sich gegenüber dem Stand der Technik dadurch aus, dass das erste Schaltmittel-Modul, d. h. der Hilfsschalter des ersten Lastschalters, als Not-Aus-Master-Modul ausgebildet ist, wobei der Logik-Schaltkreis sowie zumindest der erste Freigabepfad in dem Not-Aus-Master-Modul integriert sind und wobei das erste zwangsgeführte Schaltmittel mit einem ersten Eingang des Logik-Schaltkreises verbunden ist und zumindest der erste Freigabepfad über eine Ausgangsklemme mit einer Anschlussklemme des Lastschalters verbunden ist und wobei das zweite Schaltmittel-Modul, d. h. der Hilfsschalter des zweiten Lastschalters als Not-Aus-Slave-Modul ausgebildet ist, umfassend zumindest das zweite zwangsgeführte Schaltmittel sowie eine Ausgangsklemme, welche mit einer Anschlussklemme des zweiten Lastschalters verbunden ist.

Durch diese Ausführungsform wird erreicht, dass die Not-Aus-Modul-Anordnung nur noch lediglich vier Komponenten umfasst, nämlich die zwei Lastschalter sowie die mit den Lastschaltern mechanisch gekoppelten Not-Aus-Module, die vorzugsweise auf die Lastschalter aufgesteckt sind.

Je nach Ausführungsform der Not-Aus-Module kann die Schnittstellenverbindung zwei oder mehr Verbindungsleitungen umfassen. Die Schnittstellenverbindung dient zur Übertragung eines Steuersignals zur Ansteuerung des zweiten Lastschalters, zur Erfassung des Schaltzustandes des zweiten zwangsgeführten Schaltmittels und zur Energieübertragung mit dem Not-Aus-Slave-Modul.

Eine weitere bevorzugte Ausführungsform zeichnet sich dadurch aus, dass das Not-Aus-Master-Modul zwei Eingangsklemmen zur Erfassung des Schaltzustandes des zwangsgeführten Schaltmittels des Not-Aus-Slave-Moduls aufweist, wobei die Eingangsklemmen über Verbindungsleitungen der Schnittstellenverbindung mit Ausgangsklemmen des Not-Aus-Slave-Moduls verbunden sind.

Eine weitere bevorzugte Ausführungsform zeichnet sich dadurch aus, dass das Not-Aus-Master-Modul die Freigabepfade für den ersten und zweiten Lastschalter aufweist, wobei Eingänge der Freigabepfade über eine modulinterne Verbindungsleitung mit Versorgungsspannung L verbunden sind und wobei ein Ausgang des ersten Freigabepfades mit der Ausgangsklemme zur Ansteuerung des ersten Lastschalters verbunden ist und wobei ein Ausgang des zweiten Freigabepfades mit einer Ausgangsklemme des Not-Aus-Master-Moduls verbunden ist, welche über eine Verbindungsleitung der Schnittstellenverbindung mit einer Eingangsklemme des Not-Aus-Slave-Moduls verbunden ist, die über eine modulinterne Verbindungsleitung mit einer Ausgangsklemme verbunden ist, welche über eine Verbindungsleitung mit einer Anschlussklemme des zweiten Lastschalters verbunden ist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von den Zeichnungen zu entnehmenden bevorzugten Ausführungsbeispielen.

Es zeigen:
- Fig. 1: eine Not-Aus-Sicherheitsschaltung nach dem Stand der Technik,
- Fig. 2: eine perspektivische Darstellung von Komponenten der Not-AusSicherheitsschaltung gem. Fig. 1 mit konventioneller Verdrahtung,
- Fig.3: eine erste Ausführungsform einer Not-Aus-Sicherheitsschaltung gemäß der Erfindung,
- Fig. 4: eine perspektivische Darstellung von Komponenten der erfindungsgemäßen Sicherheitsschaltung mit reduziertem Verdrahtungsaufwand,
- Fig. 5: eine zweite Ausführungsform einer Not-Aus-Sicherheitsschaltung gemäß der Erfindung und
- Fig. 6: eine dritte Ausführungsform einer Not-Aus-Sicherheitsschaltung gemäß der Erfindung.

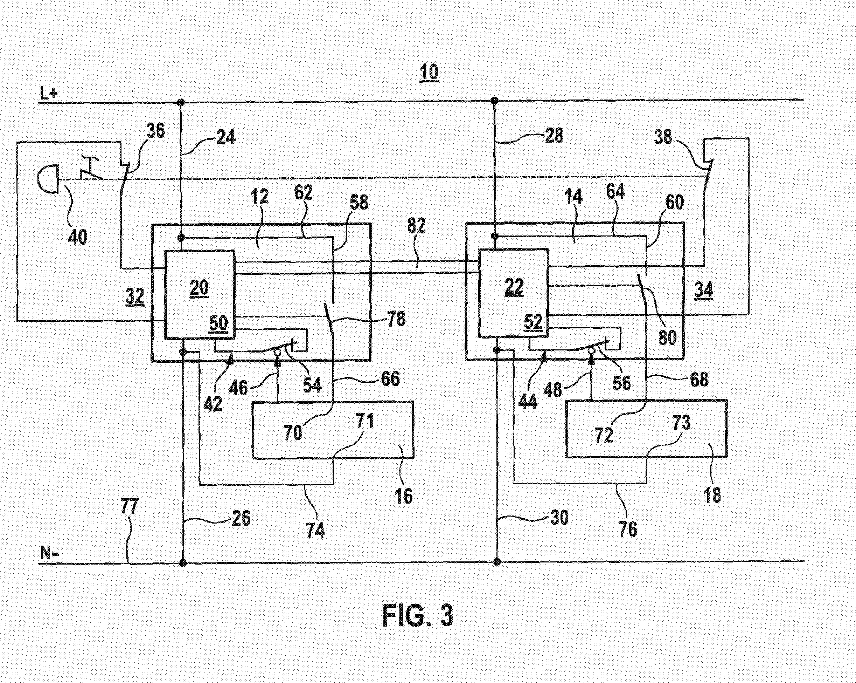

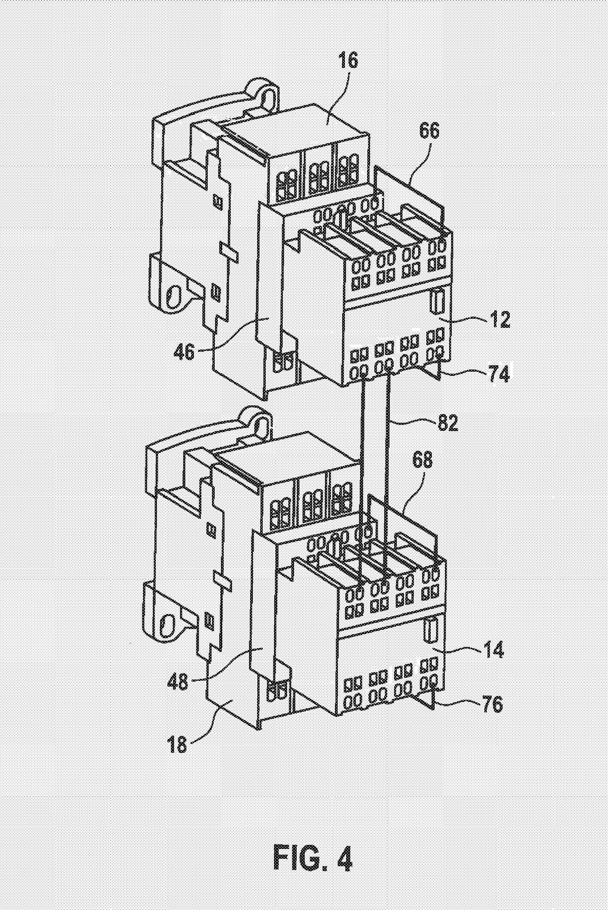

Fig. 3 zeigt eine schematische Darstellung einer erfindungsgemäßen Not-Aus-Sicherheitsschaltung 10. Diese umfasst ein erstes Not-Aus-Modul 12, ein zweites Not-Aus-Modul 14 sowie von den Not-Aus-Modulen 12, 14 ansteuerbare Lastschalter 16, 18. Die Not-Aus-Module 12, 14 sind als auf die Lastschalter 16, 18 aufsteckbare Aufsteckmodule ausgebildet, so dass diese jeweils über eine mechanische Zwangskopplung mit einem der Lastschalter 16, 18 gekoppelt sind, wie in Fig. 4 dargestellt.

Die Not-Aus-Module 12, 14 sind identisch aufgebaut und umfassen einen Logik-Schaltkreis 20, 22, der über eine Versorgungsleitung 24, 28 mit Versorgungsspannung L+ und über eine Versorgungsleitung 26, 30 mit einem Neutralleiter N- verbunden ist.

Der Logik-Schaltkreis 20, 22 weist einen Eingang 32, 34 zur Erfassung jeweils eines Öffner-Kontakts 36, 38 eines Not-Aus-Schalters 40 auf. Der Not-Aus-Schalter 40 ist zweikanalig ausgebildet, wobei die Öffner-Kontakte 36, 38 über eine mechanische Zwangskopplung miteinander verbunden sind.

Gemäß der Erfindung ist des Weiteren vorgesehen, dass das Not-Aus-Modul 12, 14 jeweils zumindest ein Schaltmittel wie Öffner-Schaltkreis 42, 44 aufweist, das mit dem jeweiligen Lastschalter 16, 18 über eine mechanische Zwangskopplung 46, 48 zwangsgekoppelt ist, so dass dann, wenn der Lastschalter 16, 18 angeschaltet ist, das Schaltmittel wie Öffner-Schaltkreis 42, 44 öffnet und dann, wenn der Lastschalter 16, 18 abgefallen ist, das Schaltmittel wie Öffner-Schaltkreis 42, 44 geschlossen ist.

Ein Schaltzustand des Öffner-Schaltkreises 42, 44 wird über einen Eingang 50, 52 des Logik-Schaltkreises 20, 22 erfasst. Der Öffner-Schaltkreis 42, 44 kann, wie in Fig. 3 beispielhaft dargestellt, als mechanischer Öffnerkontakt 54, 56 ausgebildet sein. Alternativ kann der Öffner-Schaltkreis 42, 44 ein optisches Schaltelement aufweisen, dessen Schaltzustand sich aufgrund der mechanischen Zwangskopplung mit dem Lastschalter 16, 18 ändert.

Das Not-Aus-Modul 12, 14 weist einen Freigabepfad 58, 60 auf, der gehäuseintern über eine Verbindungsleitung 62, 64 mit Versorgungsspannung L+ und über eine externe Verbindungsleitung 66, 68 mit einem ersten Anschluss 70, 72 des Lastschalters 16, 18 verbunden ist. Ein zweiter Anschluss 74, 76 des Lastschalters 16, 18 ist über eine Verbindungsleitung 74, 76 mit einem Neutralleiter-Anschluss 77 des Not-Aus-Moduls 12 verbunden.

Der Freigabepfad 58, 60 weist in dem dargestellten Ausführungsbeispiel ein Schaltelement wie Schließer 78, 80 auf, das über den Logik-Schaltkreis 20, 22 mittels Relais ansteuerbar ist. Je nach Ausführungsform kann der Freigabepfad 58, 60 auch mehrere, in Reihe geschaltete Schaltelemente (nicht dargestellt) umfassen.

Zum Austausch von Informationen, insbesondere betreffend Schaltzustände der Öffnerkontakte 36, 38 des Not-Aus-Schalters 40, der Schaltzustände der Öffner-Schaltkreise 42, 44 sowie der Zustände der Freigabepfade 58, 60 sind die Logik-Schaltkreise 20, 22 über eine Kommunikationsverbindung 82 miteinander gekoppelt.

Gemäß einer Ausführungsform ist vorgesehen, dass das erste Not-Aus-Modul 12 als Master-Modul ausgebildet ist, welches über die Kommunikationsverbindung 82 mit dem zweiten Not-Aus-Modul 14 verbunden ist, welches als Not-Aus-Slave-Modul ausgebildet ist. Über die Kommunikationsverbindung 82 werden Signale zwischen dem Master- und Slave-Modul ausgetauscht.

Die Freigabepfade weisen Schaltelemente 78, 80 auf, die als Relaiskontakte oder Halbleiterschaltelemente ausgebildet sein können, welche über die jeweiligen Logik-Schaltkreise 20, 22 angesteuert werden.

Der durch die erfindungsgemäße Sicherheitsschaltung erreichte geringe Platzbedarf in einem Schaltschrank sowie der reduzierte Verdrahtungsaufwand werden durch Vergleich der Ausführungsformen gemäß Fig. 2 und Fig. 4 deutlich.

Der reduzierte Verdrahtungsaufwand ergibt sich dadurch, dass die Funktionalität des bekannten Not-Aus-Moduls in die auf die Lastschalter 16, 18 aufsteckbaren Not-Aus-Aufsteckmodule 12, 14 integriert ist, wobei in jedem der Not-Aus-Aufsteckmodule 12, 14 zumindest ein mit dem Lastschalter 16, 18 zwangsgeführter Öffner-Schaltkreis 42, 44 zur Erfassung des Schaltzustands des Lastschalters 16, 18 realisiert ist.

Insbesondere die für den Rückführkreis benötigten Verdrahtungen entfallen nach der erfindungsgemäßen Ausführungsform, da die Öffner-Kontakte 54, 56 bereits in dem Not-Aus-Modul 12, 14 integriert sind.

Fig. 4 zeigt die Lastschalter 16, 18 sowie die darauf aufgesteckten Not-Aus-Module 12, 14. Sie sind lediglich über die Kommunikationsverbindung 82 miteinander verbunden, so dass neben dem reduzierten Platzbedarf auch ein reduzierter Verdrahtungsaufwand gewährleistet ist.

Die Verbindungsleitungen 66, 68, 74, 76 könnten am Not-Aus-Aufsteckmodul 12, 14 bereits bei Lieferung angebracht sein, so dass der Anwender diese Verbindungsleitungen nach dem Aufstecken der Not-Aus-Aufsteckmodule 12, 14 nur noch mit Anschlüssen 70, bzw. 72, 73 der Lastschalter 16, 18 verbinden muss.

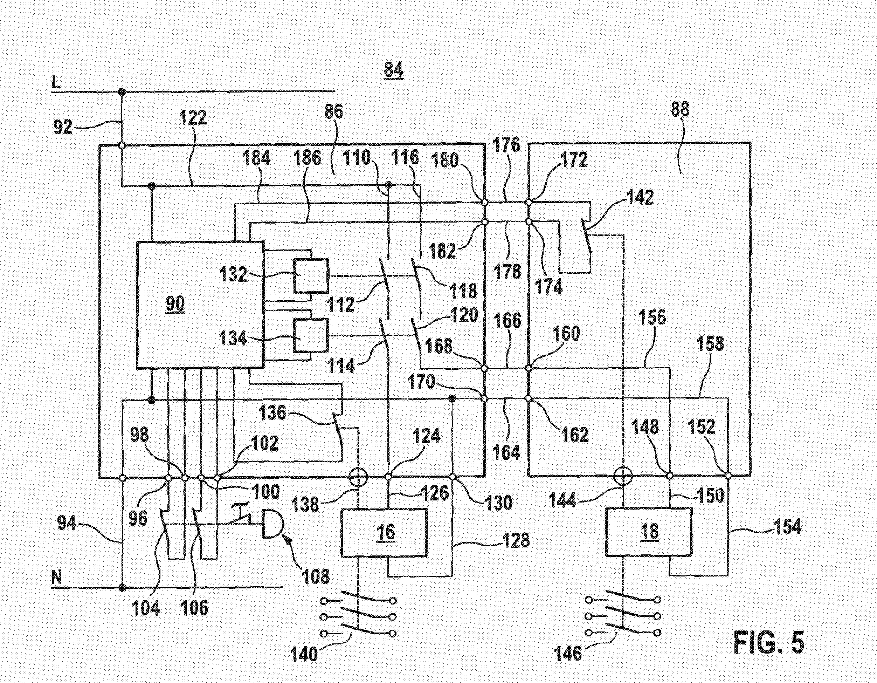

Fig. 5 zeigt rein schematisch eine zweite Ausführungsform einer Sicherheitsschaltung 84, umfassend ein erstes Not-Aus-Aufsteckmodul 86, welches auf dem Lastschalter 16 aufsteckbar ist sowie ein zweites Not-Aus-Aufsteckmodul 88, welches auf dem Lastschalter 18 aufsteckbar ist.

Bei der dargestellten Ausführungsform umfasst das Not-Aus-Aufsteckmodul 86 einen Logikschaltkreis 90, der über eine Verbindungsleitung 92 mit Versorgungsspannung L verbunden ist. Des Weiteren ist der Logikschaltkreis 90 über eine Verbindungsleitung 94 mit Neutralleiter N verbunden.

An dem Not-Aus-Aufsteckmodul 86 sind Anschlussklemmen 96, 98 sowie 100, 102 für Öffner-Kontakte 104, 106 eines Not-Aus-Schalters 108 vorgesehen. Die Anschlussklemmen 96 - 102 sind mit dem Logik-Schaltkreis 90 verbunden.

Zur Ansteuerung des ersten Lastschalters 16 ist ein erster Freigabepfad 110 vorgesehen, umfassend die Schließer-Kontakte 112, 114 sowie ein zweiter Freigabepfad 116, umfassend die Schließer-Kontakte 118, 120. Die Freigabepfade sind eingangsseitig über eine interne Verbindungsleitung 122 mit Versorgungsspannung L verbunden.

Ein Ausgang des Freigabepfades 110 ist mit einer Anschlussklemme 124 verbunden, die über eine Verbindungsleitung 126 mit einem Anschluss des Lastschalters 16 verbunden ist. Ein zweiter Anschluss des Lastschalters 16 ist über eine Verbindungsleitung 128 mit einem Anschluss 130 des Not-Aus-Aufsteckmoduls 86 verbunden, der intern mit dem Neutralleiter N verbunden ist.

Die Schließer-Kontakte 112, 118 sowie 114, 120 der Freigabepfade 110, 116 sind jeweils mit Relais 132, 134 ansteuerbar, welche mittels des Logik-Schaltkreises 90 ansteuerbar sind.

Des Weiteren ist in dem Not-Aus-Aufsteckmodul 86 ein Öffner-Kontakt 136 vorgesehen, der über eine mechanische Schnittstelle 138 mit Kontakten 140 des Lastschalters 116 zwangsgekoppelt ist.

Über die mechanische Schnittstelle 136 wird die Schaltstellung der Schließer-Kontakte 140 des Lastschalters 160 auf den Öffner-Kontakt 136 mechanisch zwangsgekoppelt übertragen. Dadurch ist sichergestellt, dass der Öffner-Kontakt 136 die Schaltstellung des Schalters 16 sicher wiedergibt.

Das Not-Aus-Aufsteckmodul 80 kann als Not-Aus-Master bezeichnet werden, während das gegenüber dem Not-Aus-Aufsteckmodul 86 einfacher aufgebaute Modul 88 als Not-Aus-Slave-Modul bezeichnet werden kann. Dieses umfasst einen Öffner-Kontakt 142, der über eine mechanische Schnittstelle 144 mit Schließer-Kontakten 146 des Lastschalters 18 mechanisch zwangsgekoppelt ist.

Es ist in dem Not-Aus-Slave-Modul 88 eine Anschlussklemme 148 vorgesehen, die über eine Verbindungsleitung 115 mit einem Anschluss des Lastschalters 18 verbunden ist sowie eine Anschlussklemme 152, die über eine Verbindungsleitung 154 und einen zweiten Anschluss des Lastschalters verbunden ist. Die Anschlussklemmen 148, 150 sind über interne Verbindungsleitungen 156, 158 mit Anschlussklemmen 160, 162 verbunden. Diese sind über Verbindungsleitungen 164, 166 mit Anschlussklemmen 168, 170 des Not-Aus-Master-Moduls 86 verbunden. Die Anschlussklemme 168 ist mit einem Anschluss des zweiten Freigabepfades 116 und die Anschlussklemme 170 ist mit dem Neutralleiter 94 verbunden.

Die zweite Ausführungsform der Sicherheitsschaltung zeichnet sich dadurch aus, dass die gesamte Logik-Steuerung 90 sowie die Hilfsrelais 132, 134 mit den Schließerkontakten 105, 118; 114, 120 in dem als Not-Aus-Master-Modul bezeichneten Not-Aus-Aufsteckmodul 86 integriert sind. Demgegenüber sind in dem Not-Aus-Slave-Modul 88 nur noch der mechanisch zwangsgekoppelte Öffnerkontakt 142 sowie die Verbindungsleitungen 156 zur Verbindung mit dem Freigabepfad und die Verbindungsleitung 158 zur Verbindung mit Massepotential integriert. Der Öffnerkontakt 142 ist ebenfalls mit Anschlüssen 172, 174 nach außen geführt und über Verbindungsleitungen 176, 178 mit Anschlüssen 180, 182 des Not-Aus-Master-Moduls 86 verbunden, welche über Verbindungsleitungen 184, 186 mit dem Logikschaltkreis 90 verbunden sind, so dass der Schaltzustand des Öffner-Kontaktes 142 erfassbar ist.

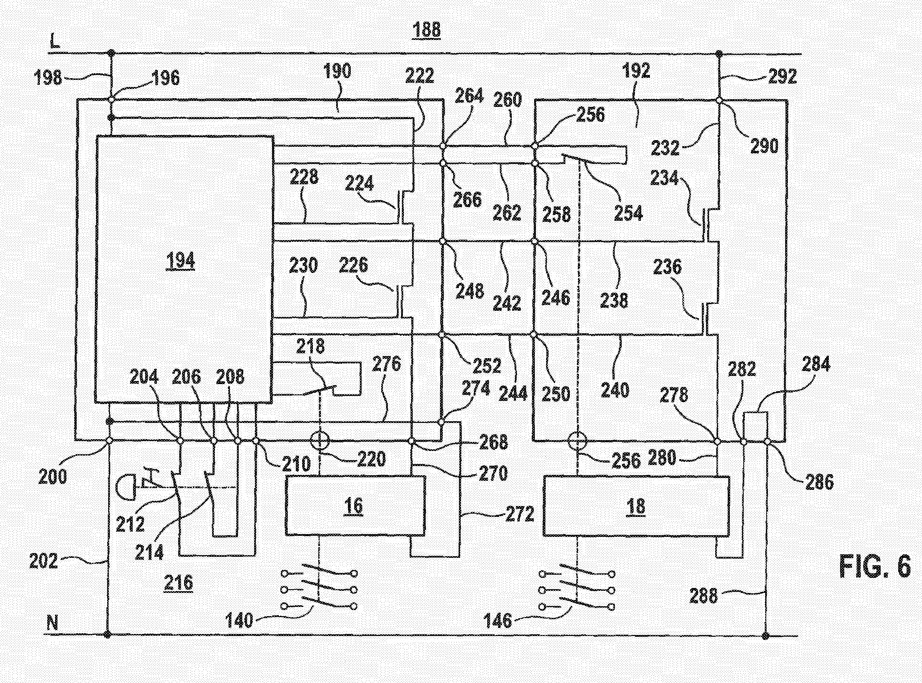

Fig. 6 zeigt eine dritte Ausführungsform einer Sicherheitsschaltung 188, welche ebenfalls ein Not-Aus-Master-Modul 190 und ein Not-Aus-Slave-Modul 192 aufweist.

Das Not-Aus-Master-Modul 190 umfasst einen Logik-Schaltkreis 194, der mit einer Anschlussklemme 196 des Not-Aus-Master-Moduls 190 verbunden ist, welche extern über eine Zuleitung 198 mit Versorgungsspannung L verbunden ist. Des Weiteren ist der LogikSchaltkreis 194 mit einer Anschlussklemme 200 verbunden, die über eine Verbindungsleitung 202 mit dem Neutralleiter N verbunden ist.

Ferner umfasst das Not-Aus-MasterMmodul 190 Anschlussklemmen 204, 206, 208, 210 für Öffner-Kontakte 212, 214 eines Not-Aus-Schalters 216.

Auch ist ein Öffner-Kontakt 218 in dem Not-Aus-Master-Modul 190 integriert, welcher über eine mechanische Schnittstelle 220 mit Schließer-Kontakten 140 des Lastschalters 16 mechanisch zwangsgekoppelt ist. Die Anschlüsse des Öffner-Kontakts 218 sind mit dem Logikschaltkreis 194 verbunden.

Ein erster Freigabepfad 222 des Not-Aus-Master-Moduls 190 umfasst eine Reihenschaltung aus elektronischen Halbleiterschaltelementen 224, 226, die jeweils über Steuerleitungen 228, 230 mittels des Logik-Schaltkreises 194 ansteuerbar sind.

Entsprechend ist in dem Not-Aus-Slave-Modul 192 ein zweiter Freigabepfad 232 vorgesehen, welcher eine Reihenschaltung aus den Halbleiterschaltelementen 234, 236 umfasst, die jeweils mit Steuerleitungen 238, 240 mit dem Logikschaltkreis 194 des Not-Aus-Master-Moduls 190 verbunden sind. Die Verbindung wird über Verbindungsleitungen 242, 244 realisiert, die mit Anschlussklemmen 246, 248 bzw. 250, 252 verbunden sind.

Schließlich ist in dem Not-Aus-Slave-Modul 192 noch ein Öffner-Kontakt 254 integriert, der über eine mechanische Schnittstelle 256 mit Schließer-Kontakten 146 des Lastschalters 18 mechanisch zwangsgekoppelt ist. Anschlüsse des Öffner-Kontaktes sind mit Anschlussklemmen 256, 258 des Not-Aus-Slave-Moduls 192 verbunden, welche über Verbindungsleitungen 260, 262 mit Anschlussklemmen 264, 266 des Not-Aus-Master-Moduls 190 verbunden sind. Die Anschlussklemmen 264, 266 sind intern mit dem Logik-Schaltkreis 194 zur Erfassung des Schaltzustandes des Öffnerkontaktes 254 verbunden.

Ein Ausgang des Freigabepfades 222 ist mit einem Anschluss 268 verbunden, der über eine Verbindungsleitung 270 mit einem ersten Anschluss des Lastschalters 16 verbunden ist, während ein zweiter Anschluss des Lastschalters 16 über eine Verbindungsleitung 272 mit einer Anschlussklemme 274 verbunden ist, die über eine interne Verbindungsleitung 276 mit dem Neutralleiter N verbunden ist.

Ein Ausgang des Freigabepfades 232 in dem Not-Aus-Master-Modul 192 ist mit einem Anschluss 278 verbunden, der über eine Verbindungsleitung 280 mit einen Steuereingang des Lastschalters 18 verbunden ist, dessen zweiter Steuereingang mit einem Anschluss 282 des Not-Aus-Master-Moduls 192 verbunden ist. Über eine interne Verbindung 284 ist die Anschlussklemme 282 mit einer weiteren Anschlussklemme 286 verbunden, die über eine Verbindungsleitung 288 extern mit dem Neutralleiter N verbunden ist. Ein Eingang des Freigabepfades 232 ist mit einer Anschlussklemme 290 verbunden, die extern über eine Verbindungsleitung 292 mit Versorgungsspannung L verbunden ist.

Die Implementierung der Not-Aus-Module nach Fig. 5 zeichnet sich dadurch aus, dass bei dieser Ausführungsform die Relais 132, 134 zum Ansteuern der Lastschalter 16, 18 in dem Master-Modul untergebracht sind. Aus Platzgründen kann es jedoch auch sinnvoll sein, Relais 134 in dem Slave-Modul zu integrieren. In diesem Fall sind jedoch mehr Verbindungsleitungen zwischen Master- und Slave-Modul erforderlich.

Alternativ können die Lastschalter 16, 18 durch Halbleiterschalter 224, 226; 234, 236 geschaltet werden, eine Ausführungsform, die in Fig. 6 dargestellt ist. In diesem Fall wäre das Slave-Modul 192 ebenfalls mit der Versorgungsspannung L und dem Neutralleiter N verbunden. Die Anzahl der Verbindungen 260, 262; 242, 244 zwischen Master- und Slave-Modul könnte auch dauerhaft erfolgen, da die beiden Leistungsschalter 16, 18 in der Regel nah beieinander installiert sind. Die Verbindung müsste in jedem Fall so lang sein, dass die beiden Leistungsschalter 16, 18 nebeneinander oder übereinander montiert werden können.

## Patentansprüche

1. Not-Aus-Modul-Anordnung (12, 14; 86, 88; 190, 192), umfassend einen Logik-Schaltkreis (20, 22; 90, 194) zur Erfassung eines Schaltzustands eines Not-Aus-Schalters (40) und zur Ansteuerung eines Lastschalters (16, 18) zum sicheren Ein- und Ausschalten einer Last, wobei die Not-Aus-Modul-Anordnung (12, 14; 86, 88; 190, 192) ein erstes Not-Aus-Modul (12, 86, 190) sowie ein zweites Not-Aus-Modul (14, 88, 192) aufweist und wobei das erste Not-Aus-Modul (12; 86; 190) über eine Schnittstellenverbindung (82, 176, 178, 166, 164; 260, 262, 242, 240) mit dem zweiten Not-Aus-Modul (14, 88, 192) gekoppelt ist,
**dadurch gekennzeichnet,**
**dass** die Not-Aus-Module (12, 14; 86, 88; 190, 192) als auf die Lastschalter (16, 18) aufsteckbare Aufsteckmodule ausgebildet sind und dass jedes der Not-Aus-Module zumindest ein mit dem gekoppelten Lastschalter (16, 18) mechanisch zwangsgeführtes Schaltmittel (42, 44; 136, 142; 218, 254) aufweist.

2. Not-Aus-Modul-Anordnung nach Anspruch 1,
**dadurch gekennzeichnet,**
**dass** das zwangsgeführte Schaltmittel (42, 44; 136, 142; 218, 254) als zwangsgeführte Öffner-Kontakt oder als optoelektronisches Schaltmittel ausgebildet ist.

3. Not-Aus-Modul-Anordnung nach Anspruch 1,
**dadurch gekennzeichnet,**
**dass** das Not-Aus-Modul (12, 14; 86; 190, 192) Schaltelemente (78, 80; 112, 114; 118, 120; 224, 226) zur Ansteuerung des Lastschalters (16, 18) aufweist, die als Schließer-Kontakte (78, 80; 112, 114; 118, 120) eines Relais oder als Halbleiterschalter (224, 226; 234, 236) wie Transistor ausgebildet sind.

4. Not-Aus-Modul-Anordnung nach Anspruch 1,
**dadurch gekennzeichnet,**
**dass** das erste Not-Aus-Modul (86; 190) als Not-Aus-Master-Modul ausgebildet ist, wobei der Logik-Schaltkreis (90; 194) sowie zumindest ein erster Freigabepfad in dem Not-Aus-Master-Modul integriert sind, dass das erste zwangsgeführte Schaltmittel (136, 218) mit einem ersten Eingang des Logik-Schaltkreises verbunden ist und dass der Freigabepfad über eine Anschlussklemme mit einer Anschlussklemme des Lastschalters (16) verbunden ist, dass das zweite Not-Aus-Modul (88; 192) als Not-Aus-Slave-Modul ausgebildet ist, umfassend zumindest das zweite zwangsgeführte Schaltmittel (142; 254) sowie eine Ausgangsklemme (148, 278) welche mit einer Anschlussklemme des zweiten Lastschalters (18) verbunden ist.

5. Not-Aus-Modul-Anordnung nach Anspruch 1,
**dadurch gekennzeichnet,**
**dass** das erste Not-Aus-Modul (86; 190) zwei Eingangsklemmen (180, 182; 264, 266) zur Erfassung des Schaltzustandes des zweiten zwangsgeführten Schaltmittels (142, 254) aufweist, wobei die Eingangsklemmen (180, 182; 264, 266) über Verbindungsleitungen (176, 178; 260, 262) mit Ausgangsklemmen (172, 174; 256, 258) des zweiten Not-Aus- Moduls (88, 192) verbunden sind.

6. Not-Aus-Modul-Anordnung nach Anspruch 1,
**dadurch gekennzeichnet,**
**dass** das erste Not-Aus-Modul (86) die Freigabepfade (110, 116) für den ersten und zweiten Lastschalter (16, 18) aufweist, wobei Eingänge der Freigabepfade (110, 116) über eine modulinterne Verbindungsleitung (122) mit Versorgungsspannung (L) verbunden sind und wobei ein Ausgang des ersten Freigabepfades (110) mit der Ausgangsklemme (124) zur Ansteuerung des ersten Lastschalters (16) verbunden ist und wobei ein Ausgang des zweiten Freigabepfades (116) mit einer Ausgangsklemme (168) des ersten Not-Aus-Moduls (86) verbunden ist, welche über eine Verbindungsleitung (166) der Schnittstellenverbindung mit einer Eingangsklemme (160) des zweiten Not-Aus-Moduls (88) verbunden ist, die über eine modulinterne Verbindungsleitung (156) mit einer Ausgangsklemme (148) verbunden ist, welche über eine Verbindungsleitung (150) mit einer Anschlussklemme des zweiten Lastschalters (18) verbunden ist.

7. Not-Aus-Modul-Anordnung nach Anspruch 1,
**dadurch gekennzeichnet,**
**dass** das erste Not-Aus-Master-Modul (86) eine Anschlussklemme für den Neutralleiter aufweist, welche über eine modulinterne Verbindung mit dem Logik-Schaltkreis (90) sowie Ausgangsklemmen (170, 130) verbunden ist, wobei eine der Ausgangsklemmen (130) über eine Verbindungsleitung (128) mit einem zweiten Anschluss des ersten Lastschalters (16) verbunden ist und wobei eine andere der Ausgangsklemmen (170) über eine Verbindungsleitung (164) der Schnittstellenverbindung mit einer Eingangsklemme (162) des Not-Aus-Slave-Moduls (88) verbunden ist, die über eine modulinterne Verbindungsleitung (158) mit einer Ausgangsklemme (152) verbunden ist, die über eine externe Verbindung (154) mit einem zweiten Anschluss des zweiten Lastschalters (18) verbunden ist.

8. Not-Aus-Modul-Anordnung nach Anspruch 1,
**dadurch gekennzeichnet,**
**dass** das Not-Aus-Slave-Modul (192) den zweiten Freigabepfad (232) für den zweiten Lastschalter (18) aufweist, wobei ein Steuereingang eines ersten Schaltmittels (234) mit einer Eingangsklemme (246) und ein Steuereingang eines zweiten Schaltmittels (236) mit einer zweiten Eingangsklemme (250) verbunden ist und wobei die Eingangsklemmen (246, 250) über Verbindungsleitungen (242, 244) der Kommunikationsschnittstelle mit Ausgangsklemmen (248, 252) des Not-Aus-Master-Moduls verbunden sind, die modulintern mit Ausgängen des Logik-Schaltkreises (194) verbunden sind.

9. Not-Aus-Modul-Anordnung nach Anspruch 8,
**dadurch gekennzeichnet,**
**dass** der in dem Not-Aus-Slave-Modul (192) integrierte zweite Freigabepfad (232) eingangsseitig über eine Anschlussklemme (290) mit der Versorgungsspannung (L) verbunden ist und dass der zweite Freigabepfad (232) ausgangsseitig über eine Ausgangsklemme (278) mit einem ersten Anschluss des zweiten Lastschalters (18) verbunden ist und dass ein zweiter Anschluss des zweiten Lastschalters (18) mit einer Eingangsklemme (282) verbunden ist, die über eine modulinterne Verbindungsleitung (284) und eine weitere Anschlussklemme (286) über eine Verbindungsleitung (288) mit dem Neutralleiter (N) verbunden ist.

10. Not-Aus-Modul-Anordnung nach Anspruch 1,
**dadurch gekennzeichnet,**
**dass** sowohl das erste Not-Aus-Modul (12) als auch das zweite Not-Aus-Modul (14) jeweils einen Logik-Schaltkreis (20, 22) sowie einen der Freigabepfade (58, 60) aufweisen, dass jedes der Module (12, 14) Eingangsklemmen (32, 34) für einen Öffner-Kontakt (36, 38) des Not-Aus-Schalters (40) aufweist und dass die Logik-Schaltkreise (20, 22) über die Kommunikationsverbindung (82) miteinander gekoppelt sind.

11. Not-Aus-Modul-Anordnung nach Anspruch 10,
**dadurch gekennzeichnet,**
**dass** das zwangsgeführte Schaltelement (42, 44) zur Erfassung des Schaltzustands des Lastschalters (16, 18) als mechanischer Öffner-Kontakt ausgebildet ist.

12. Not-Aus-Modul-Anordnung nach Anspruch 11,
**dadurch gekennzeichnet,**
**dass** das zwangsgeführte Schaltmittel (42, 44) zur Erfassung des Schaltzustands des Lastschalters (16, 18) als optisches Schaltelement ausgebildet ist.

13. Not-Aus-Modul-Anordnung nach Anspruch 1,
**dadurch gekennzeichnet,**
**dass** die Schaltmittel (78, 80; 112, 114; 118, 120) der Freigabepfade (58, 60; 110, 118) als Schließer-Kontakte ausgebildet sind, die vorzugsweise in einer Reihenschaltung von zwei Schließer-Kontakten angeordnet sind, wobei die Schließer-Kontakte (112, 118) bzw. (114, 120) Schließer-Kontakte jeweils eines Sicherheitsrelais (132, 134) sind und in verschiedenen Freigabepfaden liegen.

14. Not-Aus-Modul-Anordnung nach Anspruch 3,
**dadurch gekennzeichnet,**
**dass** das Schaltmittel (224, 226; 234, 236) zur Ansteuerung des Lastschalters (16, 18) als Halbleiterschaltelement wie Transistor ausgebildet ist, das jeweils mittels des Logik-Schaltkreises (20, 22) ansteuerbar ist.
